# NEUE EUROPÄISCHE PATENTSCHRIFT

(11) **EP 0 613 103 B2**
(45) Veröffentlichungstag und Bekanntmachung des Hinweises auf die Entscheidung über den Einspruch: **04.04.2007**
(45) Hinweis auf die Patenterteilung: 22.04.1998
(21) Anmeldenummer: 93110433.5
(22) Anmeldetag: 30.06.1993
(51) Int. Cl.: G07C 1/30

(54) **Verfahren zum Erfassen von Parkzeiten und/oder Parkgebühren mit Parkkarten**
Method for determining parking times and/or fees using parking cards
Procédé d'établissement de durées et/ou montants de stationnement utilisant des cartes de stationnement

(30) Priorität: 20.02.1993 DE 9302481 U
(43) Veröffentlichungstag der Anmeldung: 31.08.1994
(73) Patentinhaber: PARKAUTOMATIC HANS FARMONT GmbH, D-40217 Düsseldorf (DE)
(72) Erfinder: Farmont, Hans, 40885 Ratingen (DE)
(74) Vertreter: Sparing Röhl Henseler Patentanwälte European Patent Attorneys

(56) Entgegenhaltungen:
- EP-A1- 0 170 716
- EP-A2- 0 147 099
- EP-A2- 0 229 631
- EP-A2- 0 492 569
- AT-B- 391 375
- CH-A5- 654 942
- DE-A1- 2 926 867
- DE-U- 9 302 481
- FR-A1- 2 625 351
- US-A- 4 319 674
- US-A- 4 926 996

## Beschreibung

Die Erfindung betrifft ein Verfahren zum Erfassen von Parkzeiten und/oder Parkgebühren mit Parkkarten nach dem Oberbegriff des Anspruchs 1.

Aus CH-A-654 942 ist eine selbstkassierende Parkraumüberwachungsanlage mit mindestens einer Einfahrtkontrollvorrichtung, mindestens einer automatischen Kasse und mit mindestens einer Ausfahrtkontrollvorrichtung bekannt, bei der nach Ausgabe eines Einfahrtkontrollbelegs eine Einfahrtschranke öffnet, zum Zahlen angefallener Parkgebühren der Einfahrtkontrollbeleg in die automatische Kasse eingegeben wird und nach Zahlung dieser Gebühr ein Ausfahrtkontrollbeleg ausgegeben wird. Als Einfahrt- und zugleich auch Ausfahrtkontrollbeleg dient ein individuell codierter, wiederverwendbarer Jeton, der als Adressenträger für einen zugeordneten Speicherplatz in einer Zentraleinheit dient. In dieser Zentraleinheit ist für jede Jetoncodierung ein Speicherplatz vorgesehen. Der Kontrollbeleg kann als scheibenförmiger, kreisrunder Jeton ausgebildet sein. Die Codierung besteht dann aus konzentrisch angeordneten lichtundurchlässigen Außenringen. Der Kontrollbeleg kann auch als ein scheibenförmiger, rechteckiger Jeton ausgebildet sein, bei dem die Codezeichen als quer zu einer der Längsseiten verlaufende geradlinige Streifen ausgebildet sind. Eine Transporteinrichtung ist deshalb vorgesehen, die den in einen Leser eingeführten Kontrollbeleg erfaßt und mit einer voreingestellten Geschwindigkeit längs einer Durchlaufbahn bewegt.

Aus der EP-A-O 147 099 ist ein elektronisches Geldmittel in Form einer runden Münze bekannt, das Daten übermittelt durch Variieren des Grades der Absorption einer von einer Handhabungsvorrichtung übermittelten Trägerfrequenz. Ein solches elektronisches Geldmittel wird neben normalen Geldmünzen eingesetzt, zum Beispiel beim Einwerfen in Verkaufsmaschinen, was zur Folge hat, daß das elektronische Geldmittel die gleiche Gestalt besitzen muß wie die normalen Geldmünzen, damit das Einwerfen derselben in Verkaufseinrichtungen möglich ist. Eine solche elektronische Geldmünze könnte in Verbindung mit einem Parkabfertigungssystem lediglich zur Zahlung angefallener Parkgebühren an einem Kassenautomaten verwendet werden.

Aufgabe der Erfindung ist daher, ein Verfahren zum Erfassen von Parkzeiten und/oder Parkgebühren mit Parkkarten nach dem Oberbegriff des Anspruchs 1 zu schaffen, das die Installierung eines einfach handhabbaren und preiswerten Parkabfertigungssystems erlaubt.

Diese Aufgabe wird gemäß dem kennzeichnenden Teil des Anspruchs 1 gelöst.

Hierdurch wird erreicht, daß alle für die Parkraumüberwachung und das Einziehen der Parkgebühren erforderlichen Daten auf der Parkkarte selbst durch Einlesen gespeichert werden, so daß die Parkkarte einen dezentralen Datenträger bildet. Eine Kommunikation mit einer Zentraleinheit kann entfallen. Durch die Kombination einer runden Parkkartengestalt und der Art und Ausbildung des maschinenlesbaren Datenträgers als Chip mit einer elektromagnetische Wellen rundabstrahlenden Datenübertragungseinrichtung können die Handhabungsvorteile einer runden Gestalt ausgeschöpft werden.

Damit dem Benutzer über die mitgeführte Parkkarte die laufende Parkzeit ständig angezeigt werden kann, kann mit der Ausgabe einer Parkkarte eine Anzeige der laufenden Parkzeit an dieser Parkkarte in Gang gesetzt werden.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
- Fig. 1: zeigt schematisch eine Draufsicht eines ersten Ausführungs beispiels der Parkkarte,
- Fig. 2: zeigt schematisch eine Seitenansicht der Parkkarte gemäß Fig. 1,
- Fig. 3: zeigt schematisch eine Draufsicht eines zweiten Ausführungs beispiels der Parkkarte,
- Fig. 4: zeigt schematisch eine Seitenansicht der Parkkarte gemäß Fig. 3,
- Fig. 5: zeigt schematisch eine Draufsicht eines dritten Ausführungs beispiels der Parkkarte.

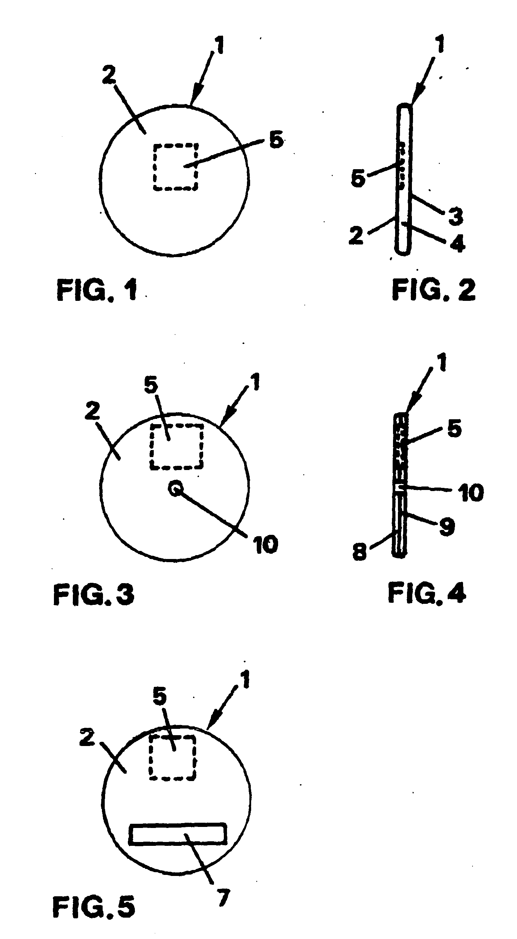

Fig. 1 und Fig. 2 zeigen ein erstes Ausführungsbeispiel einer Parkkarte zur gebührenpflichtigen Betätigung einer Parkschranke in Form eines flächigen Kunststoffstücks 1 mit einer Vorderseite 2 und einer Rückseite 3, die mit Abstand und parallel zueinander angeordnet sind. Die Vorderseite 2 und die Rückseite 3 begrenzen ein rund ausgebildetes Kunststoffstück 1. Die Parkkarte besitzt damit die Gestalt einer runden Münze, die über einen die Umfangsfläche bildenden Rand 4 abrollen kann. Der Raum zwischen der Vorderseite 2 und der Rückseite 3 ist vollständig mit Kunststoffmaterial ausgefüllt, so daß das Kunststoffstück 1 massiv ausgebildet ist. Der Raum zwischen Vorderseite 2 und Rückseite 3 kann allerdings auch nur teilweise ausgefüllt sein, so daß das Kunststoffstück eine innere Hohlstruktur aufweist, um gegebenenfalls das Rollverhalten in Abhängigkeit vom Gewicht der Parkkarte einstellen zu können.

In die Vorderseite 2 ist weiterhin ein maschinenlesbarer Datenträger eingesetzt, bei dem es sich um ein elektronisches Identifikations- und/oder Kommunikationsbauelement 5 handelt, das berührungslos und lageunabhängig anspricht bzw. arbeitet und zum Speichern und/oder Lesen verschiedener Parkkenndaten ausgebildet ist. Im einzelnen wird auf die nachfolgende Beschreibung verwiesen. Dieses Datenträgerbauelement 5 kann bündig mit der Vorderseite 2 abschließen oder in einer Ausnehmung in dem Kunststoffstück 1 unter bzw. hinter der Vorderseite 2 liegen, so daß das Datenträgerbauelement 5 von dem Kunststoffstück 1 umhüllt ist. Die Anordnung des Datentragerbeuelenents 5 an oder in der Parkkarte kann mittig oder seitlich oder außermittig erfolgen.

Wie in den Fig. 3 und 4 dargestellt, kann die runde Münze anstelle einer einstückigen Ausbildung auch mehrstückig ausgebildet sein. Die runde Münze besteht hier aus zwei fest miteinander verbindbaren Scheiben 8, 9, die bündig aneinander setzbar sind und in dem von ihnen umschlossenen Innenraum das Datenträgerbauelement 5 aufnehmen. Eine solche Gestaltung vereinfacht die Montage des Datenträgerbauelements 5 in dem Kunststoffstück 1, wenn insbesondere von außen der Einbau des Datenträgerbauelements 5 nicht erkennbar sein soll. Zudem weist das Kunststoffstück 1 einen Durchbruch 10 auf, der hier die Form eines mittig liegenden Rundlochs aufweist. Dieser Durchbruch 10 kann natürlich auch bei der runden Parkmünze gemäß Fig.1 und 2 vorgesehen sein.

Die Dicke des Kunststoffstücks 1 gemäß der Fig. 1 bis 4 beträgt 3 mm, kann jedoch zwischen 0,5 und 6 mm variieren und liegt vorzugsweise zwischen 2 und 4 mm. Der Durchmesser des Kunststoffstücks 1 beträgt 40 mm, kann aber zwischen 20 und 70 mm variieren und liegt vorzugsweise zwischen 35 und 50 mm.

Fig. 5 zeigt ein drittes Ausführungsbeispiel der Parkkarte, das hinsichtlich der Gestalt des Kunststoffstücks 1 und des Identifikations- und/oder Kommunikationsbauelements 5 wie das erste und zweite Ausführungsbeispiel ausgebildet ist, in Ergänzung aber noch ein Anzeigenfeld 7 aufweist für die visuelle Anzeige der Adresse des Parkhauses sowie der Parkkartennummer in Klarschrift und/oder der laufenden Parkzeit. Bei einer Anzeige der laufenden Parkzeit kann die Vorderseite 2 eine digitale Zeitanzeige aufweisen, die mit einem Uhrwerk ausgestattet ist, das mit Ausgabe der Parkkarte in Gang gesetzt wird.

Das berührungslos und lageunabhängig arbeitende Identifikations- und/oder Kommunikationsbauelement 5 umfaßt einen Chip und eine elektromagnetische Wellen abstrahlende Datenübertragungseinrichtung. Dieses Bauelement 5 speichert zumindest eine einmalige und damit eindeutige Codenummer, die berührungslos und lageunabhängig ausgelesen werden kann. Das Bauelement 5 kann neben seiner Speicherfähigkeit auch verarbeitungsfähig sein und hierzu mit einzelnen Menüs geladen werden, um als dezentraler Datenträger zu dienen, der nicht nur ausgelesen, sondern auch mit Parkkenndaten beschrieben werden kann. Der Chip kann folglich für jeden Parkvorgang neu programmiert werden, um eine zusätzliche Verarbeitung der Parkkenndaten zu erlauben. Die Parkkenndaten werden dann von der runden Parkmünze mitgeführt und für jeden Parkvorgang neu erfaßt, wobei die vorhergehenden Parkkenndaten gelöscht oder überschrieben werden können. Ein wiederholtes Ausgeben der Parkkarte mit fix-code oder reprogrammierbarem Bauelement 5 für Kurzparker ist folglich möglich. Gleiches gilt für die Verwendung der Parkkarte als Debit- oder Dauerparkkarte.

Vorzugsweise arbeitet das Identifikations- und/oder Kommunikationsbauelenent 5 passiv und ohne Batterien, und zwar mit einer induktiven Übertragung von Energie und Daten. Das Bauelement 5 umfaßt dann einen Chip und eine Antenne in Form einer Spule, die zur Energie- und Datenübertagung dient. Auf dem Chip befinden sich ein Speicherbereich, in dem der Code oder eine Identifikationsnummer fest abgelegt ist, und ein elektronischer Schaltkreis. Chip und Spule bauen einen Schwingkreis auf, wobei die Spule Empfangsspule für die induktive Energieübertragung und Sendespule für die Datenübertragung mittels Eigenresonanz des Schwingkreises in Kommunikation mit einer Lese-Schreibstation ist. Die Frequenzen der angeregeten Schwingungen können im Bereich zwischen 100 und 300 khz liegen.

Eine in den Bereich einer Lese-Schreibstation von Einfahrt/Ausfahrt- oder Kassenstationen gelangende Parkkarte empfängt folglich über ihre Antenne Impulse, wodurch der Chip ein Auslösesignal erhält und daraufhin über die Spule die Identifikationsnummer an die Lese-Schreibstation überträgt. Diese Datenübertragung ist nicht gerichtet und erfolgt im allgemeinen über Rundstrahlwellen und damit berührungslos und lageunabhängig. Wird der Speicherbereich auf einem verarbeitungsfähigen Chip, beispielsweise von einem EEPROM ( elektrisch löschbarer und programmierbarer Festwertspeicher), gebildet, so ist das Bauelement auch berührungslos und lageunabhängig programmierbar.

Das Identifikations- und/oder Kommunikationsbauelement 5 kann auch aktiv arbeiten und besitzt dann neben einem speicherfähigen und gegebenenfalls programmierbaren Chip einen Sender, der aktiviert wird und seine Identifikationsnummer aussendet, wenn er in das Signalfeld einer Lese-Schreibstation gelangt. Die Energieversorgung erfolgt über eine in das Bauelement 5 eingebaute Batterie. Im Übrigen gelten die vorstehenden Ausführungen.

Die Verwendung der beschriebenen Parkkarte in einem Parkabfertigungssystem zur Erfassung von Parkzeiten und/oder Parkgebühren kann wie folgt genutzt werden.

Die Parkkarten in Form runder Parkmünzen werden an der Einfahrt eines Parkhauses oder Parkgeländes über einen Dispenser aus einem Vorratsbehälter mit einem Fallschacht ausgegeben. Vor der Ausgabe wird in einer von der Parkkarte zu passierenden Lese-Schreibstation der jeweilige Kenncode berührungslos und lageunabhängig gelesen und an einen Rechner gegeben, der Einfahrtzeit, Datum und die Stationsnummer hinzufügt und diese gesammelten Daten speichert. Ist die Parkkarte als dezentraler Datenträger ausgebildet, kann die Einfahrtzeit direkt in der Parkkarte gespeichert werden, so daß die externe Datenübermittlung an den Rechner entfällt. Mit der Entnahme der Parkkarte aus einem Auswurfschlitz wird eine Einfahrtschranke geöffnet.

Am Ende der Parkdauer gibt der Benutzer die Parkkarte in einen Kassenautomaten ein. Gelangt die Parkkarte in das Signalfeld einer Lese-Schreibstation wird die Kennung wieder berührungslos und lageunabhängig ausgelesen und per Rechner die Einfahrtzeit mit der Ist-Zeit verglichen und daraus die Parkgebühr ermittelt und angezeigt. Nach der Bezahlung der angefallenen Parkgebühr wird die Parkkarte freigegeben. Der Rechner Übernimmt die neue (Bezahl)Zeit und addiert eine Karrenzzeit, in der der Parkhausbenutzer ausgefahren sein muß. Alternativ kann die neue (Bezahl)zeit in die Parkkarte berührungslos und lageunabhängig eingeschrieben werden.

Mit der noch immer gleichen Parkkarte fährt der Benutzer zur Ausfahrt und wirft diese in einen entsprechenden Eingabeschlitz, wo sie erneut gelesen wird. Bei Gültigkeit öffnet sich die Ausfahrtschranke und die Parkkarte fällt in einen Auffangbehälter zur Wiederverwendung. Bei der programmierbaren Parkkarte werden zudem die eingelesen Parkkenndaten bis auf den fix-Code gelöscht.

Das Parkabfertigungssystem läßt sich nicht nur auf Kurzparker, sondern auch auf Dauerparker anwenden.

## Patentansprüche

1. Verfahren zum Erfassen von Parkzeiten und/oder Parkgebühren mit Parkkarten aus jeweils einem flächigen Kunststoffstück in Form einer runden wiederverwendbaren Münze, die mit einem maschinenlesbaren Datenträger zum Abspeichern einer individuellen Kennung ausgestattet ist, durch Ausgeben einer berührungslos gelesenen Parkkarte an einen Parkkunden von einer Einfahrtstation bei Einfahrt in ein Parkhaus oder auf ein Parkgelände, Eingeben dieser Parkkarte in einen Kassenautomaten zur Zahlung angefallener Parkgebühren und anschließendes Eingeben dieser Parkkarte in eine Ausfahrtstation zur Freigabenachfrage und öffnen einer Parkschranke, **dadurch gekennzeichnet,**
**daß** eine jede Parkkarte vor der Ausgabe in der Einfahrtstation mit der Einfahrtzeit lageunabhängig beschrieben wird als dezentraler Datenträger für Parkdaten, der jeweils mit einem Chip und einer elektromagnetische Wellen rundabstrahlenden Datenübertragungseinrichtung ausgestattet ist,
die Parkkarte nach Lesen der individuellen kennung, Lesen der Einfahrtzeit und Zahlung der angefallenen Parkgebühren in dem Kassenautomaten mit einer Ausfahrtzeit beschrieben wird,
die Parkdaten der Parkkarte nach dem öffnen der Parkschranke gelöscht oder bei Neuausgabe überschrieben werden und
die Parkkarte unter Nutzung der Rolleigenschaften zu Lese/Schreibstationen transportiert wird für das Lesen/Beschreiben mit Parkdaten.

## Claims

1. Method of registering parking times and/or parking fees using parking tickets made, in each case, of a flat plastics piece in the form of a round reusable coin which is equipped with a machine-readable data carrier for storing an individual identification, which method comprises the issue by an entry station of a parking ticket, which is read contact-free, to a parking customer on entry into a multistorey carpark or carparking area, the insertion of that parking ticket into a payment machine for the payment of due parking fees and then the insertion of that parking ticket into an exit station to request release and to open a parking barrier,
**characterised in that**
- before issue, each parking ticket has the entry time written onto it, independently of position, in the entry station, the parking ticket being in the form of a local data carrier for parking data, the data carrier being equipped with a chip and a data transmission device that emits electro-magnetic waves omni-directionally,
- after the individual identification has been read, the entry time has been read and the due parking fees have been paid, an exit time is written on the parking ticket in the payment machine,
- the parking data on the parking ticket are erased after the parking barrier has opened or are overwritten if the parking ticket is re-issued, and
- the parking ticket is transported, exploiting its rolling properties, to read/write stations for the parking data to be read/written.

## Revendications

1. Procédé pour enregistrer des durées et/ou des taxes de stationnement avec des cartes de stationnement constituées chacune d'une pièce plate en matière synthétique sous forme d'une pièce ronde réutilisable, laquelle est équipée d'un support de données lisible par machine pour fournir une identification individuelle, comprenant la délivrance d'une carte de stationnement lue sans contact à un client de stationnement par une station d'entrée lors de l'entrée dans un bâtiment de stationnement ou sur un terrain de stationnement, l'introduction de cette carte de stationnement dans une caisse automatique pour le paiement de taxes de stationnement dues et l'introduction subséquente de cette carte dans une station de sortie pour demander la libération d'une barrière de stationnement et l'ouvrir, **caractérisé en ce que**
- chaque carte de stationnement reçoit dans la station d'entrée, avant sa délivrance, l'inscription de l'heure d'entrée indépendamment de sa position, pour servir de support de données décentralisé pour les données de stationnement, lequel support est pourvu d'une puce et d'un dispositif de transmission de données émettant des ondes électromagnétiques radialement,
- la carte de stationnement, après lecture d'identification individuelle, lecture de l'heure d'entrée et paiement des taxes de stationnement dues dans la caisse automatique, reçoit l'inscription d'une heure de sortie,
- après ouverture de la barrière de stationnement, les données de stationnement de la carte de stationnement sont effacées ou écrasées lors d'une nouvelle délivrance, et
- la carte de stationnement est transportée avec utilisation de ses propriétés de roulement jusqu'aux stations de lecture/écriture pour la lecture/écriture des données de stationnement.
